# EUROPÄISCHE PATENTANMELDUNG

(11) **EP 1 898 620 A1**
(43) Veröffentlichungstag der Anmeldung: **12.03.2008**
(21) Anmeldenummer: 06120261.0
(22) Anmeldetag: 07.09.2006
(51) Int. Cl.: H04M 7/12

(54) **Integration von Mobilstationen der zweiten Generation in bestehende IP-Centrex-Lösungen**

(71) Anmelder: Nokia Siemens Networks GmbH & Co. KG, 81541 München (DE)
(72) Erfinder: Ruppelt, Christian, 81369, München (DE)
(74) Vertreter: Maier, Daniel Oliver

(57) **Zusammenfassung**

Die Erfindung betrifft ein IP-Centrex-Kommunikationssystem zum herstellen einer Kommunikationsverbindung zwischen Centrex-Teilnehmern einer Gruppe, wobei in der Gruppe Mobilfunkteilnehmer mit Mobilstationen der zweiten Generation enthalten sind.
Wenn die von den nomadierenden Usern einer Business Group verwendeten mobilen Kommunikationsendgeräte über einen sog. "dual Transfer Mode" verfügen, das heißt Geräte der 2,5 Generation (z.B. GRPS-Mobiltelefone General Packet Radio Service) bzw. Geräte der der 3. Generation (z.B. UMTS Mobiltelefone) verwenden, so können diese mittels der Technik der Paketvermittlung ohne große Anpassung in bestehende IP-Centrex-Lösungen integriert werden.
Hingegen ist die unmittelbare Nutzung der Centrex Funktionalität für GSM Handys ausgeschlossen.
Die Erfindung sieht den Einsatz eines SIP/IN Gateways (12) vor, das ausschließlich Signalisierungszwecken dient. Dieses neue Signalisierungs-Gateway ist in einen Signalisierungspfad (18,19) eingebunden, der den Centrex-Server (1) mit einer Mobilvermittlungsstelle (3) verbindet. Alle von Mobilfunkteilnehmern initiierten Verbindungswünsche werden über diesen Signalisierungspfad an den Centrex-Server signalisiert. Als Antwort darauf übermittelt der Centrex-Server an das Signalisierungs-Gateway, und in weitere Folge an die Mobilvermittlungsstelle, eine Rück-Signalisierungsnachricht. Diese beeinflusst das Routing der Kommunikationsverbindung.

## Beschreibung

### Technisches Gebiet

Die Erfindung betrifft ein IP-Centrex-Kommunikationssystem zum Herstellen einer Kommunikationsverbindung zwischen Centrex-Teilnehmern einer Gruppe, wobei in der Gruppe Mobilfunkteilnehmer mit Mobilstationen eines Mobilfunknetzes enthalten sind, wobei eine Netzeinrichtung vorhanden ist, die in einem paketvermittelten Netz angeordnet ist und ein Computerprogrammprodukt enthält, welches für die Centrex-Teilnehmer eine Centrex-Funktionalität bereitstellt.

### Stand der Technik

In der Telekommunikationstechnik wird unter dem Begriff Centrex (Central Office Exchange) allgemein das Auslagern der Funktionalität einer privaten Nebenstellenanlage (Central Branch Exchange PBX) in das öffentliche Telekommunikationsnetz (auch als Switched Circuit Net (SCN) oder auch als Public Switched Telephone Network (PSTN) bezeichnet) verstanden. Centrex bietet für eine private Kommunikationsgruppe (Business Group) spezielle Telekommunikationsdienstleistungen. Leistungsmerkmale dieser Dienstleistung sind fest mit dem physikalischen Anschluss im öffentlichen Telekommunikationsnetz verknüpft. Das öffentliche Telekommunikationsnetz, ist von seinem Ursprung her ein leitungsvermitteltes Netz, bei dem Signalisierungsdaten und Sprachdaten über unterschiedliche Netzwerke übertragen werden; bei ISDN (Integrated Services Digital Network) erfolgt die Signalisierung für den Auf- und Abbau einer Nutzkanal-Verbindung und für die Steuerung von ISDN-Diensten auf der Basis des Zeichengabesystems Nr. 7, (abgekürzt ISUP ISDN-User Part). Die Centrex-Funktionalität wird von einem Dienstserver, z.B. einer speziellen Vermittlungsstelle des öffentlichen Netzes, auf der die Centrex-Funktionalität beispielsweise durch Software realisiert ist, den Teilnehmern (User) bereitgestellt. Centrex ist vom Ansatz her ein Dienst (Service) der vom Festnetz her kommt und nicht standardisiert ist. Da die Centrex-Funktionalität häufig auf einem Gastrechner eines öffentlichen oder eines privaten Netzes ausgelagert ist, spricht man oft auch von einer "hosted PBX".

Neben leitungsorientierten Telefonnetzen sind seit langem Datennetze bekannt, bei denen die Informationsübermittlung in Form von Datenpaketen erfolgt. Ein bekanntes paketorientiertes Kommunikationsnetz ist das Internet. Das Internet ist ein offenes (Weitverkehrs-) Datennetz mit offenen Schnittstellen zur Verbindung von lokalen und regionalen Datennetzen unterschiedlicher Hersteller. Wegen des zum Einsatz kommenden Internet-Protokolls (IP) wird dieses Netz zuweilen auch als IP Netz bezeichnet. Für ein offenes System gelten die Spezifikationen des OSI-Referenzmodells (Open Systems Interconnection). Bevor die Übertragung von Nutzinformationen beginnen kann, muss die sendende Endeinrichtung mit der als Empfänger adressierten Einrichtung eine Verständigung über deren Empfangsbereitschaft herbeiführen. Dieser Aufbau der Kommunikationsverbindung, im Folgenden kurz auch als Verbindungsaufbau oder Call bezeichnet, wird durch das Versenden von Verbindungsaufbaupaketen und deren Bestätigungen realisiert.

Heutzutage erfolgt im Internet die Lenkung der Leitwege für die Datenpakete zunehmend unter Verwendung des SIP-Protokolls (Session Initiation Protocol). Das SIP-Protokoll ist ein reines Signalisierungsprotokoll, das heißt es dient ausschließlich zur Übertragung von Signalisierungs-Informationen, im Folgenden kurz auch als Signalisierung bezeichnet.

Von dieser Signalisierung ist die Übertragung der Nutzdaten, das heißt die "eigentliche Information", die Mediendaten, zu unterscheiden. Je nach Kontext der Anwendung spricht man im Zuge der Übertragung der Nutzdaten auch von einer Nutzkanalverbindung, zum Beispiel von einer Sprachkommunikationsverbindung, oder auch von einem Bearer-Channel, im Folgenden schlicht auch als Bearer oder kurz Verbindung bezeichnet. Da die Verbindung aus einer Aneinanderreihung von Teilstrecken besteht, spricht man auch vom Routen einer Verbindung.

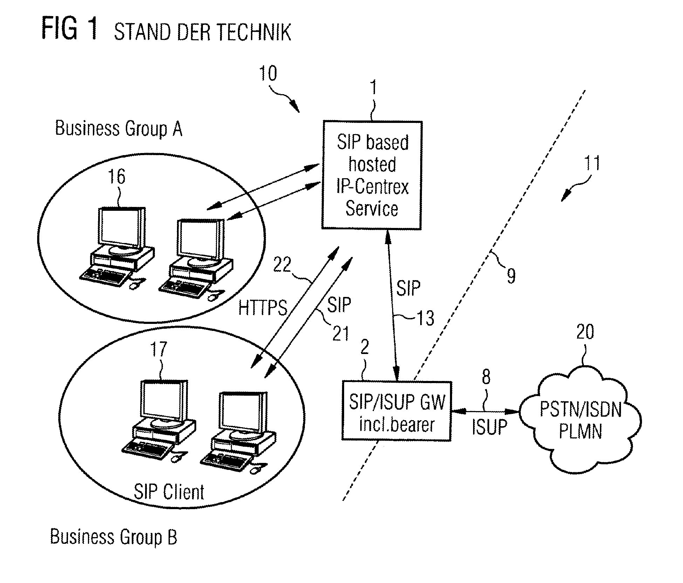

Im Zuge der Konvergenz von Sprach- und Datennetzen wachsen leitungsorientierte und paketorientierte Netze zunehmend zu einem hybriden Netz zusammen. Aus dem Festnetz bekannte Telekommunikationsdienstleistungen, wie beispielsweise Centrex, werden auch bei der Sprachübertragung VoIP (Voice over IP) in paketorientierten Netzen gewünscht und angeboten. So wird die Centrex-Funktionalität häufig in privaten, IP-basierten Kommunikationsnetzen auf einem sog. IP-Centrex Server bereitgestellt, so dass innerhalb eines Unternehmens Teilnehmer (User) einer Business Group VoIP (Voice over IP) bzw. Multimedia over IP-Verbindungen in einem gesonderten Kontext nutzen können. Da die Centrex-Funktionalität auf einem Server ausgelagert ist, spricht man auch von einer "hosted IP Centrex Application", im Folgenden auch "Business Logic" oder kurz auch "Application" genannt. Eine solche bekannte "hosted-IP-Centrex-Lösung" für Festnetzteilnehmer ist in Figur 1 skizziert.

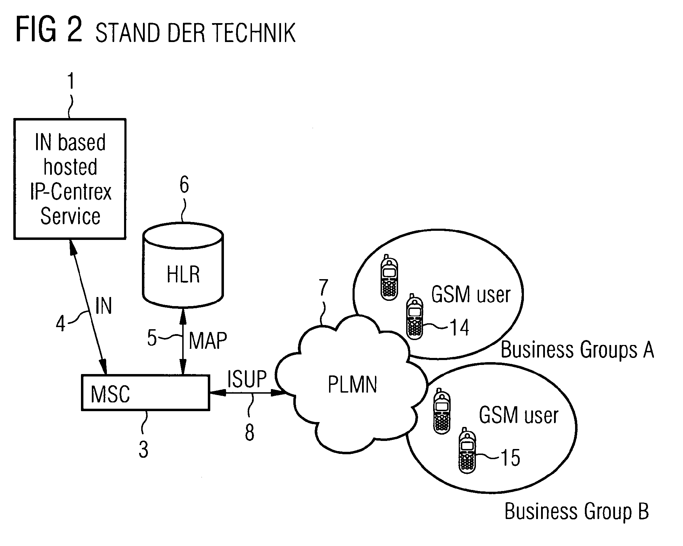

Eine Centrex-Funktionalität kann aber auch von Mobilfunkteilnehmern genutzt werden. Dies ist in Figur 2 skizziert. Die Centrex-Funktionalität wird von einem Server, der sich in einem paketvermittelten Netz befindet, bereitgestellt. Die Verbindung zwischen einer Mobilvermittlungsstelle (MSC) des leitungsorientierten Mobilfunknetzes und dem IP-Centrex-Server stellt ein intelligentes Netzwerk (IN) her ("IN based hosted IP-Centrex-Server"). Meldet sich in einem solchen Szenario beispielsweise ein GSM-User (Global System for Mobile Communication) an einer MSC an, so wird aus einer Teilnehmerdatenbasis, dem so genannten Home Location Register (HLR) sein Profil in die MSC geladen. Wird von ihm ein Verbindungswunsch initiiert, so wird über das intelligente Netzwerk (IN) der IP-Centrex-Server involviert. Der IP-Centrex-Server stellt die Signalisierungsdaten für den Verbindungswunsch des GSM Users bereit. Das weitere Routing des Calls (zum Beispiel mit neuer Rufnummer) wird über das intelligente Netzwerk (IN) an die MSC zurück signalisiert (Figur 2) und die Nutzkanalverbindung zwischen dem rufenden und dem gerufenen GSM User einer Business Group entsprechend hergestellt.

Wenn die von den nomadierenden Usern einer Business Group verwendeten mobilen Kommunikationsendgeräte über einen sog. "duale Transfer Mode" verfügen, das heißt Geräte der 2,5 Generation (z.B. GRPS-Mobiltelefone General Packet Radio Service) bzw. Geräte der der 3. Generation (z.B. UMTS-Mobiltelefone Universal Mobile Telecommunications System) verwenden, so können diese mittels der Technik der Paketvermittlung ohne große Anpassung eine Netzarchitektur gemäß der Figur 1 nutzen.

Hingegen ist die unmittelbare Nutzung der Centrex-Funktionalität für GSM Handys ausgeschlossen, da diese ausschließlich über den leitungsvermittelnden Standard GSM, nicht aber über einen paketvermittelnden Standard verfügen. Sie sind nicht "Click-to" fähig. GSM-Mobiltelefonen dieser zweiten Generation, auch als 2G-Handys bezeichnet, sind derzeit aber noch sehr gebräuchlich. Seitens der Netzbetreiber wird daher zunehmend gefordert, dass auch dieser noch weit verbreitete Typ von Handys in bestehende IP-Centrex-Lösungen integriert wird.

Ein anderes Problem, das bei der IP-Integration von GSM-Mobiltelefonen auftritt besteht darin, dass bei einem sog. "On-Net Call", das heißt wenn zwei Centrex-Kommunikationsteilnehmer einer Geschäftsgruppe, die 2G-Handys verwenden, miteinander sprechen möchten, beim Aufbau der Verbindung sowohl der Signalisierungskanal, als auch der Nutzdatenkanal stets von einer Mobilvermittlungsstelle im GSM-Netz zu einem Netzgrenzelement (SIP/ISUP-Gateway) und von dort wieder zurück in das GSM-Netz geführt wird. Dadurch entsteht ein parallel verlaufender Informationsstrom, der Ressourcen des hybriden Kommunikationsnetzes beansprucht, aber keinen weiteren Nutzen bringt, denn dieser Call könnte im GSM-Netz gehalten werden. In der Literatur wird dieser höchst unerwünschte Effekt auf Grund der Ähnlichkeit zwischen dem umgebogenen, hin und zurück laufenden Informationsstrom mit einem Posaunenbogen, auch als Tromboning bezeichnet.

### Darstellung der Erfindung

Aufgabe der Erfindung ist es, ein IP-Centrex-Kommunikationssystem anzugeben, bei dem Centrex-Kommunikationsdienstleistungen auch von Mobilfunkteilnehmern in Anspruch genommen werden können, wobei auch Mobilstationen der zweiten Generation zugelassen sind, ohne dass für die Integration der Mobilfunkteilnehmer aufwändige Anpassungen in bestehenden hosted-IP-Centrex-Lösungen erforderlich sind.

Diese Aufgabe wird durch ein IP-Centrex-Kommunikationssystem mit den Merkmalen des Patentanspruchs 1 gelöst. Auf vorteilhafte Ausgestaltungen der Erfindung nehmen die Unteransprüche Bezug.

Die Erfindung sieht den Einsatz eines neuen Gateways vor, das ausschließlich Signalisierungszwecken dient. Dieses neue Signalisierungs-Gateway ist in einen Signalisierungspfad eingebunden, der den Centrex-Server mit einer Mobilvermittlungsstelle verbindet. Alle von Mobilfunkteilnehmern initiierten Verbindungswünsche werden über diesen Signalisierungspfad an den Centrex-Server signalisiert. Als Antwort darauf übermittelt der Centrex-Server an das Signalisierungs-Gateway, und in weitere Folge an die Mobilvermittlungsstelle, eine Rück-Signalisierungsnachricht. Diese beeinflusst das Routing der Kommunikationsverbindung und damit ist eine, den Verbindungswunsch berücksichtigende, bessere Ausnutzung der Netzkomponenten möglich.

Von besonderem Vorteil ist dies in jenen Centrex-Verbindungswünschen, in denen eine Kommunikationsverbindung zwischen einer rufenden Mobilstation und zumindest einer weiteren gerufenen Mobilstation hergestellt werden soll. Hier kann mittels der vom Centrex-Server an die Mobilvermittlungsstelle übermittelten Signalisierungsnachricht bewirkt werden, dass die Mobilvermittlungsstelle die Kommunikationsverbindung innerhalb des Mobilfunknetzes herstellt. Mit anderen Worten, bei Verbindungswünschen von GSM-2G User zu GSM-2G User erfolgt das Herstellen der Nutzkanalverbindung so, dass der Träger im Mobilfunknetz verbleibt. Bislang wurde der Bearer (Träger der Nutzinformation) in solchen Fällen an ein Netzgrenzelement heran- und wieder zurückgeführt. Durch die Erfindung wird dies verhindert. Damit tritt der unerwünschte Effekt des Trombonings nicht mehr auf. Folge davon ist, dass Ressourcen des hybriden Kommunikationsnetzes nicht unnütz belastet und besser ausgenützt werden. Ein weiterer Vorteil ergibt sich daraus, dass bei der Realisierung der Erfindung eine bereits bestehende "hosted-IP-Centrex-Architektur" weitgehend beibehalten werden kann. Es sind weder hardwareseitig noch softwareseitig aufwändige Entwicklungsarbeiten erforderlich.

Es kann günstig sein, wenn im Falle einer Kommunikationsverbindung zwischen einer rufenden Mobilstation und zumindest einem am paketorientierten Kommunikationsnetz angeschlossen gerufenen Centrex-Teilnehmer, die Kommunikationsverbindung über ein zweites Netzgrenzelement zu routen, welches in einer "hosted-IP-Centrex-Lösung" in der Regel bereits vorhanden ist. Damit wird der Bearer über ein Gateway geführt, welches für das hier erforderliche Interworking eingerichtet ist.

Hinsichtlich der Kosten kann es vorteilhaft sein, wenn das neue Signalisierungs-Gateway ausschließlich für Zwecke der Signalisierung eingerichtet ist und nicht über die aufwändige Funktionalität der Umsetzung eines Trägers, beispielsweise zwischen RTP (Real Time Protocol) und TDM (Time Division Multiplex) verfügt.

Besonders vorteilhaft ist hierbei eine Aufführung des Signalisierungs-Gateways, welche über die Funktionalität der Umsetzung von Signalisierungsinformationen zwischen einem IP-basierten Signalisierungsprotokoll, zum Beispiel SIP, in ein IN-basiertes Signalisierungsprotokoll verfügt. Dadurch kann im Falle eines GSM-Mobilfunknetzes die Centrex-Funktionalität in einem IP-Netz auch von GSM-Mobilstation der zweiten Generation (2G Handys) genutzt werden.

Von besonderem Vorteil kann es sein, wenn die Centrex-Funktionalität im Centrex-Server so eingerichtet ist, dass sie von Mobilfunkteilnehmern und fest angeschlossenen, d.h. nicht migrierenden Centrex-Teilnehmern gleichzeitig nutzbar ist.

### Kurzbeschreibung der Zeichnung

Zur weiteren Erläuterung der Erfindung wird im nachfolgenden Teil der Beschreibung auf die Zeichnungen Bezug genommen aus denen weitere vorteilhafte Ausgestaltungen, Einzelheiten und Weiterbildungen der Erfindung zu entnehmen sind. Es zeigen:
- Figur 1: eine IP-Centrex-Netzarchitektur für Festnetzteilnehmer gemäß dem Stand der Technik in einer vereinfachten Darstellung;
- Figur 2: eine IP-Centrex-Netzarchitektur für mobile Kommunikationsteilnehmer gemäß dem Stand der Technik in einer vereinfachten Darstellung;
- Figur 3: eine integrierte hosted IP-Centrex-Netzarchitektur für Festnetz und Mobilfunkteilnehmer (2G; 2,5G und 3G) gemäß der Erfindung in einer vereinfachten Darstellung.

### Ausführung der Erfindung

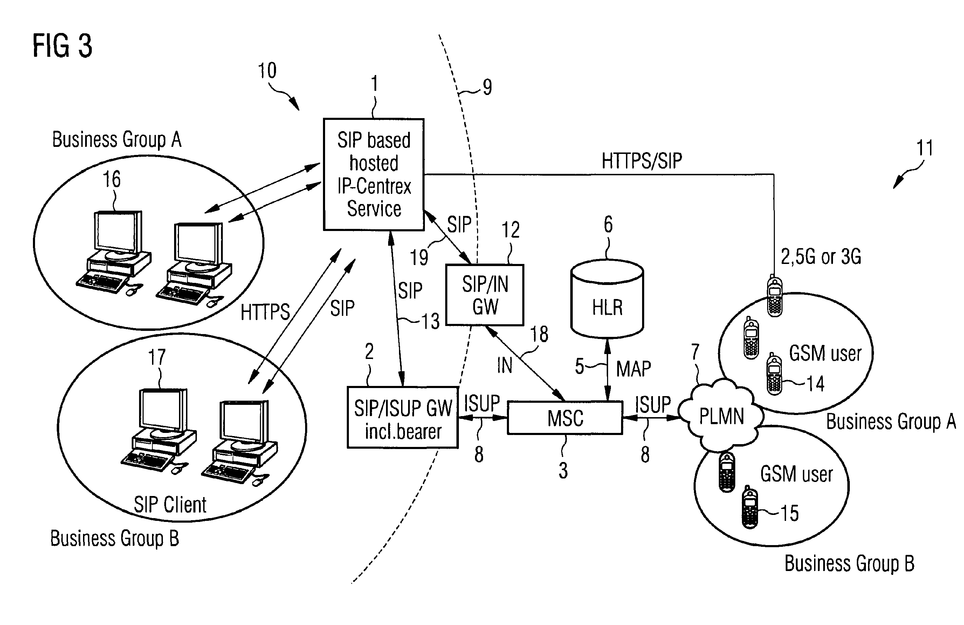

Für das bessere Verständnis der Erfindung sei zunächst auf bekannte IP-Centrex-Kommunikationssysteme Bezug genommen, wie sie in Figur 1 für Festnetzteilnehmer und in Figur 2 für Mobilfunkteilnehmer skizziert sind. Ausgehend von diesem Stand der Technik wird dann an Hand von Figur 3 ein Ausführungsbeispiel der Erfindung näher erläutert. In der Zeichnung der Figur 1, der Figur 2 und der Figur 3 sind der Übersichtlichkeit wegen jeweils nur die für die Erläuterung notwendigen Netzelemente gezeichnet. Ferner sind nur Signalisierungsverbindungen, nicht aber Nutzkanalverbindungen dargestellt.

Die Figur 1 zeigt eine bekannte Netzarchitektur zur Nutzung einer Centrex-Funktionalität für IP SIP-Festnetzteilnehmer. In Figur 1 ist mit dem Bezugszeichen 1 ein Centrex-Server 1 gezeigt, der sich in einem paketvermittelten Netz 10 befindet. Auf diesem Server 1 ist die Centrex-Funktionalität "SIP based hosted IP-Centrex Service" in Form eines Computerprogrammproduktes, das heißt in Form von Software und/oder Hardware implementiert. Die Centrex-Funktionalität beinhaltet auch eine Entscheidungslogik, die im Folgenden auch als Business Logic bezeichnet wird. Der Centrex-Server 1 ist in der linken Bildhälfte mit verschiedenen fest angeschlossenen SIP-Clients 16, 17 verbunden, von denen jeweils zwei zu einer Business Group A bzw. B zusammengefasst sind. Von diesen SIP-Clients 16, 17 werden Verbindungswünsche mittels HTTPS bzw. SIP (Pfeil 22 bzw. 21 in Figur 1) zum Server 1 signalisiert, d.h. sie stoßen über 3rd party call control mittels HTTP(S) (Hypertext Transfer Protocol) oder über ein Web-Portal oder über 1st party über SIP Multimedia-Verbindungswünsche an. Die Teilnehmer(selbst)administration wird über die Web-Schnittstelle versorgt. An der Schnittstelle 9 zum leitungsvermittelten PSTN/ISDN 20 (ggf. weiter zu einem PLMN (Public Land Mobile Network) muss eine Anpassung erfolgen, da in einem paketorientierten und in einem leitungsorientierten Netz sowohl die Signalisierungs-Informationen als auch die Nutzdaten auf unterschiedliche Art und Weise übertragen werden. Diese Inkompatibilität überwinden spezielle Netzgrenzelemente, sog. Gateways SIP/ISUP GW, von denen in Figur 1 nur ein Gateway 2 gezeichnet ist. Ein solches SIP/ISUP Gateway 2 übersetzt zum einen zwischen der paketorientierten Signalisierung SIP und der leitungsvermittelten Signalisierung ISUP (Pfeil 13 bzw. 8 in Figur 1). Zum anderen ist das Gateway auch ein Interface im Nutzdatenstrom und stellt beispielsweise eine Anpassung zwischen RTP (Real Tim Protocol) des IP-Netzes und Time Devison Multiplexing (TDM) des PSTN oder eines Mobilfunknetzes PLMN (Public Land Mobile Network) her.(Die Figur 1 zeigt ausschließlich Signalisierungsverbindungen; der Bearer ist nicht dargestellt). Alle "Click-to" Verbindungswünsche für z.B. Sprache, Video oder Instant Messaging (IM) werden innerhalb des IP-Centrex-Servers 1 (SIP based hosted IP-Centrex Service) verarbeitet. Die Verbindung wird dann über SIP aufgebaut. Off-net Calls werden ebenfalls über SIP signalisiert und über das SIP/ISUP Gateway 2 (MGCF Media Gateway Control Function) in Richtung des leitungsorientierte Netzes 11 PSTN oder PLM aufgebaut. Der Bearer wird dabei über ein Trunk Gateway (IP/TDM) geleitet, welches durch die MGCF (in Figur 1 nicht näher dargestellt) gesteuert wird.

Wie aus dem Centrex-Dienst leitungsvermittelnder Sprachnetze bekannt, haben auch hier die Teilnehmer einer IP-Centrex-Gruppe eine virtuelle, centrex-spezifische Rufnummer. Darüber hinaus die bekannten Centrex-Funktionsmerkmale, wie beispielsweise Kurzwahl, automatischer Rückruf, Anklopfen, Rufumleitung, Konferenzschaltung, Rufnummernanzeige sowie spezielle Gebührenberechnung und andere.

Die Figur 2 zeigt eine bekannte IN basierende IP-Centrex Lösung für Mobilfunkteilnehmer. In Figur 2 ist mit dem Bezugszeichen 3 eine Vermittlungsstelle (MSC) eines Mobilfunknetzes 7 (PLMN) bezeichnet. Das Mobilfunknetz 7 arbeitet hier nach dem GSM-Standard. Die Mobilvermittlungsstelle 3 (MSC) des GSM-Netzes 7 ist über den Pfeil 4, der die Signalisierung über ein intelligentes Netz (IN) andeutet, mit dem Centrex-Server 1 verbunden. Auf dem Server 1 ist der "IN based hosted IP-Centrex Service" implementiert. Ein weiterer Pfeil 5 verbindet die Mobilvermittlungsstelle 3 mit einer Mobilfunkteilnehmer-Datenbank 6, dem so genannten Home Location Register (HLR). Durch diese Signalisierungsverbindung 5 kann das MSC 3 über eine C-Schnittstelle per MAP (Mobil Application Part), Protocol (SS 7) auf Daten der GSM User zugreifen. Meldet sich beispielsweise ein GSM User mit seiner mobilen Endeinrichtung 14 bzw. 15 (Business Group A oder B) an der MSC 3 an, dann wird vom HLR 6 sein Profil in die MSC 3 geladen. Bei einem Verbindungsaufbau von 14 bzw. 14 wird über das intelligente Netz (IN) der IP Centrex-Server 1 involviert. (Im Unterschied zu Figur 1 ist hier der Server 1 ein "IN based hosted IP-Centrex Service".) Die Business Logic im Server 1 handhabt das weitere Routing des Calls (zum Beispiel mit einer Centrex Rufnummer aus dem Rufnummernplan), indem sie über das intelligente Netz IN (in Figur 2 nicht näher dargestellt) eine entsprechende Signalisierungsnachricht an die MSC 3 zurück signalisiert, wodurch die Verbindung mittels ISUP-Signalisierung 8 zwischen 3 und 7 hergestellt wird.

Durch eine Netzarchitektur, wie sie eingangs erwähnt und aktuell in Standardisierungsgremien z.B. 3GPP und TISPAN NGV zur Zeit diskutiert werden, können 2,5G User und 3G User, die "duale Transfer Mode" Handy verwenden, ohne große Anpassung die in Figur 1 dargestellte Architektur verwenden, da hier gleichermaßen HTTPS und SIP verwendet werden kann.

Anders verhält es sich aber mit Handys der älteren Generation, den sog. GSM 2G-Handys. GSM 2G-Handys sind nicht "Click-to" fähig. Dieser Handy-Typ beherrscht aber derzeit noch immer den Markt. Betreiber von GSM-Netzen sind daher bestrebt bekannte IP-Centrex Lösungen mit möglichst geringem Aufwand so anzupassen, dass auch dieser ältere Handy-Typ integriert werden kann. Dazu muss aber der in Figur 1 dargestellte "SIP hosted IP-Centrex Service" zentral in den Signalisierungsverkehr eingeschleift werden. Dies ist insbesondere notwendig, da zum Beispiel die Funktion "Anzeige von busy/idle" und die entsprechende Ausführung der Centrex-Funktionalität von diesen Zuständen sehr wichtige Funktionsbestandteile eines "hosted IP Centrex Services" sind.

Würde man alle Verbindungswünsche, die aus dem GSM-Netz kommen über ein SIP/ISUP Gateway (wie es in Figur 1 für Festnetzteilnehmer dargestellt ist) routen, so hätte dies den Nachteil, dass dieses SIP/ISUP Gateway auch für Verbindungswünsche beansprucht werden würde, die dieses Gateway nicht benötigen, wie z.B. on-Net GSM zu on-Net GSM Calls. Dabei würde der bereits eingangs erwähnte unerwünschte Effekt des Bearer-Trombonings auftreten, der Netzeinrichtungen überlasten kann.

Wie in der folgenden Darstellung der Erfindung noch näher ausgeführt, ist es nunmehr durch die erfindungsgemäße "Fixed Mobile Integration" möglich, die in Figur 1 skizzierte SIP basierte, aus dem Festnetz bekannte IP-Centrex-Lösung, nahezu unverändert und ohne zusätzliches IN- oder Parlay-Interface auch für GSM Teilnehmer parallel nutzen zu können. Dadurch können innerhalb einer Centrex-Gruppe mobile Teilnehmer und stationäre VoIP-Teilnehmer gemeinsam Centrex Features nutzen. Im Wesentlichen wir dieses Ziel durch eine Anordnung eines SIP/ISUP-Gateways und eines SIP/IN Gateways erreicht (Figur 3). Beide Gateways übernehmen die jeweilige Mapping-Funktion von ISUP bzw. IN auf SIP.

Die Figur 3 zeigt das erfindungsgemäße IP-Centrex-Kommunikationssystem mit einem integrierten "hosted IP-Centrex Service" für Festnetz (SIP) und Mobilfunkteilnehmer (2G, 2,5G und 3G). Wie durch Vergleich mit Figur 1 leicht erkennbar ist, unterscheidet sich Figur 3 im Wesentlichen durch das neu hinzugefügte Gateway 12. Dieses neue Gateway 12 ist topologisch im Bereich der Schnittstelle 9 zwischen dem paketorientierte Netz 10 und dem leitungsvermittelten Mobilfunknetz 11 angeordnet. Das Gateway 12 dient ausschließlich zur Signalisierung und bildet ein Interface zwischen der paketorientierten Signalisierung des Protokolls SIP mit der leitungsorientierten Signalisierung 18, welche von einem intelligenten Netzwerk (IN) bereitgestellt wird. Der Signalisierungspfad 18 und 19 verbindet die Netzeinrichtung 1 (SIP based hosted IP-Centrex Service) mit der Mobilvermittlungsstelle 3 (MSC). Jeder Verbindungswunsch der von einem der GSM-Handys 14 (GSM User Business Group A) bzw. 15 (GSM User Business Group B) ausgeht wird über ISUP 8 an die MSC 3 signalisiert. Von dort erfolgt die Signalisierung zur Netzeinrichtung 1 über einen (ersten) Signalisierungsweg 18, 19, der über das neue Gateway 12 geführt ist. Im Centrex-Server wird über das weiter Routing entschieden.

Wenn es sich um einen On-Net Call von einem GSM 2G User zu einem GSM 2G User handelt wird in der Netzeinrichtung 1 durch die centrex-Funktionalität eine Signalisierungs-Informationen erzeugt, welche über diesen (ersten) Signalisierungsweg 18, 19, das heißt über das neu hinzugefügte Signalisierungs-Gateway 12 (SIP/ISUP GW) an die MSC 3 zurück übermittelt wird. Diese rückübermittelte Signalisierungsnachricht veranlasst die MSC 3 die gewünschte Nutzkanalverbindung innerhalb des leitungsvermittelten Mobilnetzes 11 zu routen. Bei diesen Routen wird das Profil des rufenden Mobilfunkteilnehmers von der Teilnehmerdatenbasis 6 in die Mobilvermittlungsstelle 3 mittels MAP-Informationen geladen.

Im Ergebnis verbleibt die durch Routen hergestellte Kommunikationsverbindung im Mobilfunknetz. Dadurch wird der unerwünschte Effekt des Tromboning des Bearers TDM vermieden. Die einzelnen Netzelemente und Verbindungswege im hybriden Kommunikationsnetz werden Dank der Erfindung effizient genutzt.

Handelt es sich hingegen um einen Verbindungswunsch der von einer Mobilstation 14,15 ausgehend an einen Festnetz-Centrex-Kommunikationsteilnehmer 16 oder 17 im IP-Netz 10 gerichtet ist, so wird dieser in an sich bekannter Weise über einen (zweiten) Signalisierungspfad 8,13, der das zweite Gateway 2 (SIP/ISUP GW inklusive Bearer) einbindet, geroutet. Wie bereits oben erwähnt, beinhaltet das Gateway 2 auch ein MGCF Media Gateway Control Function, die hier zur Umsetzung des Bearers auch erforderlich ist.

Aus der Sicht des Centrex-Servers 1 stellen die beiden vorgeschalteten Gateways 2 und 12 den Übergang zu den "associated mobile devices" dar. Der gesamte Signalisierungsverkehr zu diesen "associated devices" wird von der Centrex-Application zu diesen beiden Gateways 2 und 12 geroutet. Die Gateways 2 und 12 übernehmen dabei Stellvertreterfunktion für die "associated devices".

Hinsichtlich der Signalisierung gilt die Regel:
- Alle On-net GSM zu GSM Verbindungen werden über das neue SIP/I N-Gateway 12 signalisiert.
- Alle IP zu TDM Mischfälle werden über das SIP/ISUP-Gateway signalisiert.

Wie bereits oben erwähnt, werden alle Verbindungswünsche, die von GSM-Usern des GSM-Netzes 7 ausgehen über das neue SIP/IN-Gateway 12 an denen IP-Centrex-Server 1 signalisiert. Erst die " Business Logic " im IP-Centrex-Server kann entscheiden, ob es sich um einen GSM zu GSM Call oder um einen GSM zu VoIP-Call (Mischfall) handelt. Davon ist das weitere Routing abhängig.

Eingangs wurde bereits erwähnt, dass die Handys vom Typ 2,5G oder 3G in der Lage sind, unmittelbar (das heißt ohne Zwischenschaltung des Gateways 12) eine Verbindung zum Centrex-Server 1 herzustellen. In Figur 3 ist dies durch die Signalisierungsverbindung HTTPS/SIP gezeichnet.

Es kann sein, dass ein ursprünglich On-net GSM zu On-net GSM Call auf Grund von speziellen Centrex-Funktionen (Business Rules) im Server 1 zu einem SIP On-net Call umgeroutet wird. Wenn dies der Fall ist, wird der Mobilvermittlungsstelle 3 über die Rückübermittlung der Signalisierungsnachricht mitgeteilt, den Call über das SIP/ISUP-Gateway 2 zu rerouten, weil es sich um einen TDM zu IP Call handelt. Mit anderen Worten, die Nutzkanal-Verbindung wird über die MGCF (die sich in Gateway 2 befindet) geführt. Von der MGCF wird der Verbindungswunsch nun zum zweiten Mal zum Centrex-Server 1 signalisiert. Innerhalb der Centrex-Application im Centrex-Server 1 können zur Effizienzsteigerung Optimierungsmaßnahmen vorgesehen seien.

Ein wesentlicher Vorteil der vorliegenden Erfindung besteht darin, dass bekannte SIP-Lösungen für hosted-IP-Centrex ohne großen Aufwand zu einer sog. "Fixed Mobile Lösung" zusammengeführt werden können. Dadurch wird eine in einem IP-Netz bereits installierte Centrex-Funktionalität auf einfache Weise auch für migrierende User zugänglich. Der aus dem Festnetz bekannte "SIP based hosted IP Centrex Service" kann bei der Integration von 2G- Mobilstationen weitgehend beibehalten werden. Die Implementierung in einem vorhandenen hybriden Kommunikationsnetz kann stufenweise erfolgen. Dabei werden keine kostenaufwendigen Entwicklungsressourcen beansprucht. Es sind keine proprietären Interfaces der hosted-IP-Centrex Lösung nach außen erforderlich.

Ein wesentlicher Vorteil der Erfindung ergibt sich im Falle der bereits oben erwähnten GSM zu GSM Calls. Hier kann bei Mobilfunk- zu Mobilfunk-User-Verbindungen das unerwünschte Tromboning des Trägers, d.h. der Sprachdatenpakete vermieden werden. Die heutzutage noch weit gebräuchlichen 2G-Handys können von Centrex-Kommunikationsteilnehmern weiterhin verwendet werden, was Netzbetreibern von GSM-Mobilfunknetzen entgegenkommt.

Im Ergebnis wird durch die Erfindung ein IP-Centrex-Kommunikationssystem geschaffen, bei dem die einzelnen Netzelemente effizient eingesetzt werden. Bei der Realisierung der Erfindung kann die aus dem Festnetz bzw. Mobilfunknetz bekannte Netzarchitektur weitgehend beibehalten werden. Es wird lediglich ein neues Netzgrenzelement - das SIP/IN-Gateway 2 - hinzugefügt, das aber ausschließlich dem Zweck der Signalisierung dient und damit vergleichsweise kostengünstig ist. Der aus dem Festnetz bekannte IP-Centrex-Service kann bei der Integration von Mobilfunkteilnehmern weitgehend übernommen werden.

Abschließend sei angemerkt, dass die vereinfachte Darstellung der Figur 3 nur die für die Erläuterung der Erfindung wesentlichen Komponenten des erfindungsgemäßen IP-Centrex-Kommunikationssystems zeigt. So ist es für den Fachmann klar, dass die in der Zeichnung der Figur 3 dargestellten Gateways, Vermittlungsstellen, Kommunikationseinrichtungen und Signalisierungspfade in einem hybriden Netz vielfach vorhanden sind. Die in der Erläuterung angesprochenen Funktionalitäten können auf mehreren Netzelementen, beispielsweise auf mehreren Servern oder mehreren Netzgrenzelementen aufgeteilt sein. Ihre Realisierung kann sowohl in Form von einem Programm-Code (Software) und/oder schaltungstechnisch (Hardware) erfolgen. Als Endgeräte kommen verschieden mobile Kommunikationsendeinrichtungen und Festnetzeinrichtungen in Frage. Der Übersichtlichkeit wegen sind in der Darstellung der Figur 3 ausschließlich die Signalisierungs-Pfade in Form von bidirektionalen Pfeilen dargestellt, nicht aber der durch die Signalisierung bewirkte Nutzdatenkanal. Insbesondere wird nochmals darauf hingewiesen, dass das mit dem Bezugszeichen 2 gekennzeichnete SIP/ISUP GW auch eine MGCF beinhaltet, das beispielsweise durch MGCP/H.248 gesteuert sein kann.

### Zusammenstellung der verwendeten Bezugszeichen

- 1: Centrex-Server (SIP // IN based hosted IP Centrex Service)
- 2: Gateway (SIP/ISUP inklusive Bearer), zweites Netzgrenzelement
- 3: Mobilvermittlungsstelle (MSC)
- 4: Signalisierungsverbindung über ein intelligentes Netzwerk
- 5: Signalisierungsverbindung zwischen 3 und 6
- 6: Teilnehmerdatenbasis, Home Location Register (HLR)
- 7: Mobilfunknetz (PLMN)
- 8: ISUP Signalisierungsverbindung
- 9: Grenzbereich zwischen 10 und 11
- 10: paketorientiertes Netz
- 11: leitungsorientiertes Netz
- 12: Signalisierungs-Gateway (SIP/IN-GW), erstes Netzgrenzelement
- 13: SIP-Signalisierung zwischen 1 und 2
- 14: GSM- Mobilstation der Business Group A
- 15: GSM- Mobilstation der Business Group B
- 16: SIP Client der Business Group A
- 17: SIP Client der Business Group B
- 18: IN Signalisierung zwischen 3 und 12
- 19: SIP Signalisierung zwischen 1 und 12
- 20: PSTN/ISDN-Netz
- 21: SIP-Signalisierung zwischen SIP Client und 1
- 22: HTTPS-Signalisierung zwischen SIP Client und 1

## Patentansprüche

1. IP-Centrex-Kommunikationssystem zum Herstellen einer Kommunikationsverbindung zwischen Centrex-Teilnehmern einer Gruppe (A,B), wobei in der Gruppe Mobilfunkteilnehmer mit Mobilstationen (14, 15) eines Mobilfunknetzes (7) enthalten sind, umfassend: eine Netzeinrichtung (1), die in einem paketvermittelten Netz (10) angeordnete ist und ein Computerprogrammprodukt enthält, welches für die Centrex-Teilnehmer eine Centrex-Funktionalität bereit stellt,
**dadurch gekennzeichnet,**
- **dass** die Netzeinrichtung (1) über einen ersten Signalisierungspfad (18,19), der über ein erstes Netzgrenzelement (12) geführt ist, und über einen zweiten Signalisierungspfad (13,8), der über ein zweites Netzgrenzelement (2) geführt ist, mit einer Mobilvermittlungsstelle (3) des Mobilfunknetzes (7) verbunden ist,
- **dass** die Mobilvermittlungsstelle (3) bei jedem Aufbau einer Kommunikationsverbindung, der von einer Mobilstation (14,15) initiiert wird, eine erste Signalisierungsnachricht erzeugt und diese über den ersten Signalisierungspfad (18,19) an die Netzeinrichtung (1) signalisiert, und
- **dass** das Computerprogrammprodukt nach Erhalt der ersten Signalisierungsnachricht eine zweite Signalisierungsnachricht erzeugt und über den ersten Signalisierungspfad (18,19) an die Mobilvermittlungsstelle (3) zurück signalisiert, wodurch das Routing der Kommunikationsverbindung beeinflusst wird.

2. IP-Centrex-Kommunikationssystem nach Anspruch 1, **dadurch gekennzeichnet, dass** im Falle eines Aufbaus einer Kommunikationsverbindung zwischen einer rufenden Mobilstation und zumindest einer weiteren gerufenen Mobilstation mittels der zweiten Signalisierungsnachricht die Mobilvermittlungsstelle (3) veranlasst wird, die Kommunikationsverbindung innerhalb des Mobilfunknetzes (7) zu routen.

3. IP-Centrex-Kommunikationssystem nach Anspruch 1, **dadurch gekennzeichnet, dass** im Falle eines Verbindungsaufbaus zwischen einer rufenden Mobilstation und zumindest einem am paketorientierten Kommunikationsnetz (10) angeschlossenen gerufenen Centrex-Teilnehmer (16,17), die Mobilvermittlungsstelle (3) mittels der zweiten Signalisierungsnachricht angewiesen wird, die Kommunikationsverbindung über das zweite Netzgrenzelement (2) zu routen.

4. IP-Centrex-Kommunikationssystem nach einem der Ansprüche 1 bis 3, **dadurch gekennzeichnet, dass** das erste Netzgrenzelement (12) ein Signalisierungs-Gateway ist.

5. IP-Centrex-Kommunikationssystem nach Anspruch 4, **dadurch gekennzeichnet, dass** das Signalisierungs-Gateway (12) eine Umsetzung zwischen einem IP-basierten Signalisierungsprotokoll, das auf einer Teilstrecke (19) des ersten Signalisierungspfads zwischen der Netzeinrichtung (1) und dem ersten Netzgrenzelement (12) verwendet wird, und einem IN-basierten Signalisierungsprotokoll, das auf einer Teilstrecke (18) des ersten Signalisierungspfads zwischen dem ersten Netzgrenzelement (12) und der Mobilvermittlungsstelle (3) verwendet wird, durchführt.

6. IP-Centrex-Kommunikationssystem nach einem der Ansprüche 1 bis 3, **dadurch gekennzeichnet, dass** das zweite Netzgrenzelement (2) eine Übersetzung zwischen einem IP-basierten Signalisierungsprotokoll, das auf einer Teilstrecke (13) des zweiten Signalisierungspfades zwischen der Netzeinrichtung (1) und dem zweiten Netzgrenzelement (2) verwendet wird, und einem leitungsorientierten Signalisierungsprotokoll, das auf einer Teilstrecke (8) des zweiten Signalisierungspfades zwischen dem zweiten Netzgrenzelement (2) und der Mobilvermittlungsstelle (3) verwendet wird, durchführt.

7. IP-Centrex-Kommunikationssystem nach Anspruch 5, **dadurch gekennzeichnet, dass** das Signalisierungs-Gateway (12) ein SIP/IN-Gateway ist.

8. IP-Centrex-Kommunikationssystem nach Anspruch 6, **dadurch gekennzeichnet, dass** das zweite Netzgrenzelement (2) ein SIP/ISUP-Gateway ist und eine Funktion zur Umsetzung eines Bearers enthält.

9. IP-Centrex-Kommunikationssystem nach einem der Ansprüche 1 bis 7, **dadurch gekennzeichnet, dass** das Mobilfunknetz (7) ein GSM-Mobilfunknetz ist und als Mobilstationen (14,15) GSM-Mobilstationen der zweiten Generation verwendet werden.

10. IP-Centrex-Kommunikationssystem nach einem der vorstehenden Ansprüche, **dadurch gekennzeichnet, dass** jeder von einer Mobilstation (14, 15) initiierte Aufbau einer Kommunikationsverbindung über das erste Netzgrenzelement (12) an die Netzeinrichtung (1) signalisiert wird.

11. IP-Centrex-Kommunikationssystem nach einem der Ansprüche 1 bis 8, **dadurch gekennzeichnet, dass** ein von einer Mobilstation (14, 15) initiierter Aufbau einer Kommunikationsverbindung zu einem nicht migrierenden Centrex-Kommunikationsteilnehmer (16,17) über das zweite Netzteilegrenzelement (2) an die Netzeinrichtung (1) signalisiert wird.

12. IP-Centrex-Kommunikationssystem nach Anspruch 10, **dadurch gekennzeichnet, dass** die Kommunikationsverbindung zu dem nicht migrierenden Centrex-Kommunikationsteilnehmer (16,17) über das zweite Netzgrenzelement (2) geroutet wird.

13. IP-Centrex-Kommunikationssystem nach einem der vorstehenden Ansprüche, **dadurch gekennzeichnet, dass** die Centrex-Funktionalität von Mobilfunkteilnehmern (14, 15) und nicht migrierenden Centrex-Teilnehmern (16, 17) gleichzeitig nutzbar ist.

14. IP-Centrex-Kommunikationssystem nach einem der vorstehenden Ansprüche, **dadurch gekennzeichnet, dass** beim Routen der Kommunikationsverbindung Daten eines Centrex-Teilnehmers, die einer Teilnehmerdatenbasis (6) gespeichert sind, berücksichtigt werden.
